# EUROPEAN PATENT SPECIFICATION

(11) **EP 4 044 645 B1**
(45) Date of publication and mention of the grant of the patent: **04.11.2026**
(21) Application number: 20882061.3
(22) Date of filing: 18.06.2020
(51) Int. Cl.: H04L 9/40, H04W 12/069, H04L 9/32, H04L 67/12, H04W 4/40, H04W 12/02, H04W 12/61, H04W 12/75

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 30.10.2019 CN 201911044660
(43) Date of publication of application: 17.08.2022
(73) Proprietor: Yinwang Intelligent Technologies Co., Ltd., Shenzhen, Guangdong 518110 (CN)
(72) Inventor: PAN, Kai, Shenzhen, Guangdong 518129 (CN); CHEN, Jing, Shenzhen, Guangdong 518129 (CN)
(74) Representative: MERH-IP Matias Erny Reichl Hoffmann Patentanwälte PartG mbB
(86) International application number: PCT/CN2020/096902
(87) International publication number: WO 2021/082471

(56) References cited:
- WO-A1-2018/182198
- CN-A- 103 973 760
- CN-A- 106 161 337
- CN-A- 108 668 258
- CN-A- 110 235 402
- US-A1- 2019 149 342
- US-A1- 2019 245 703
- US-B1- 10 439 825
- ONBOARD SECURITY ET AL: "1609.2.1, June 2019 draft", vol. WG ITS WG5 Security, 28 June 2019 (2019-06-28), pages 1 - 64, XP014349229, Retrieved from the Internet <URL:docbox.etsi.org/ITS/ITSWG5/05-CONTRIBUTIONS/2019/ITSWG5(19)000037_1609_2_1__June_2019_draft.pdf> [retrieved on 20190628]
- INTEL CORPORATION: "Rel 14 – Authorisation and Security for V2X Communication", 3GPP DRAFT; S3-160546-V2X-AUTHORIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Del Cabo, Mexico; 20160509 - 20160514, 8 May 2016 (2016-05-08), Mobile Competence Centre ; 650, route des Lucioles ; F-06921 Sophia-Antipolis Cedex ; France, XP051099236
- HUAWEI, HISILICON: "Optimized certificate-based security solution for PC5 LTE-V2X communication", 3GPP DRAFT; S3-161767_OPTIMIZED CERTIFICATE-BASED SECURITY SOLUTION FOR PC5 LTE-V2X COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Santa Cruz de Tenerife (Spain); 20161107 - 2016111, 6 November 2016 (2016-11-06), Mobile Competence Centre ; 650, route des Lucioles ; F-06921 Sophia-Antipolis Cedex ; France, XP051185842
- M. GROVES CESG: "Elliptic Curve-Based Certificateless Signatures for Identity-Based Encryption (ECCSI); rfc6507.txt", INTERNET ENGINEERING TASK FORCE (IETF), REQUEST FOR COMMENTS: 6507, CATEGORY: INFORMATIONAL, 2 February 2012 (2012-02-02), pages 1 - 17, XP015081405, Retrieved from the Internet <URL:https://www.rfc-editor.org/rfc/pdfrfc/rfc6507.txt.pdf>

## Description

### CROSS-REFERENCE TO RELATED APPLICATIONS

### TECHNICAL FIELD

This application relates to the field of communication technologies, and in particular, to a communication method and an apparatus.

### BACKGROUND

A vehicle-to-everything (vehicle-to-everything, V2X) system is a key technology in the internet of vehicles. In the V2X technology, vehicles may implement autonomous driving by using a plurality of disposed in-vehicle apparatuses and depending on information provided by advanced driver-assistance systems (advanced driver-assistance systems, ADAS).

It needs to be ensured that messages (also referred to as V2X messages) between the vehicles and any device are authentic and reliable, to ensure autonomous driving safety of the vehicles. Currently, authenticity of a V2X message is verified based on a public key infrastructure (public key infrastructure, PKI) certificate technology. To be specific, for a V2X message, if an in-vehicle apparatus serving as a receiver successfully verifies a signature of the V2X message and a used certificate, it is considered that the V2X message is authentic and reliable. The certificate is issued by a certificate authority (certificate authority, CA) to the in-vehicle apparatus. To protect privacy of the in-vehicle apparatus, a PKI issues a plurality of certificates to the in-vehicle apparatus, for the in-vehicle apparatus to randomly select and use. A certificate that is randomly selected and used by an in-vehicle apparatus is referred to as an anonymous certificate.

Currently, a manner of issuing, by the CA, an anonymous certificate to an in-vehicle apparatus is as follows: The CA directly sends the anonymous certificate to the in-vehicle apparatus based on a request of the in-vehicle apparatus. This manner may be considered as a synchronization mode. In another manner, the CA feeds back a download address of the anonymous certificate to the in-vehicle apparatus based on the request of the in-vehicle apparatus, and then the in-vehicle apparatus obtains the anonymous certificate based on the download address. This manner is referred to as an asynchronization mode relative to the synchronization mode. In the synchronization mode, if there are a large quantity of in-vehicle apparatuses, and the plurality of in-vehicle apparatuses request anonymous certificates from the CA at the same time, the CA needs to issue a large quantity of anonymous certificates at a time. In this case, a high performance requirement is imposed on the CA. Due to a performance limitation of the CA, some in-vehicle apparatuses need to wait for a long period of time before receiving the anonymous certificates, leading to a long delay. In asynchronization mode, the CA does not need to issue anonymous certificates to the in-vehicle apparatuses immediately. Therefore, compared with the synchronization mode, in the asynchronization mode, a delay is longer, and issuing efficiency of the anonymous certificate is lower. It can be learned that currently, a delay of verifying an in-vehicle device is long, and efficiency is low.

Document 1609.2.1, June 2019 draft, ETSI draft, discloses a method for providing a download adress and a time for downloading certificates from the download adress.

Document US 2019/245703 A1 discloses a method for revoking a digital certificate. In this method, activation of the digital certificate is blocked by withholding an activation code from the certificate user. The certificates are generated by a plurality of entities (210, 220, 838) in a robust process that preserves user privacy (e.g. anonymity) even in case of collusion of some of the entities.

Document US 10 439 825 B1 discloses a system including a Quality of Service (QoS) manager that: distributes the requests from the clients across client queues, each of the client queues corresponding to a particular client; and divides requests into smaller subgroups of entries corresponding to a subset of the computerized devices needing certificates.

### SUMMARY

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention.

Embodiments of this application provide a communication method and an apparatus, to verify vehicles and improve verification efficiency and autonomous driving safety of the vehicles.

### BRIEF DESCRIPTION OF DRAWINGS

FIG. 1 is a schematic diagram of a network architecture to which an embodiment of this application is applied;
FIG. 2 is a flowchart of a communication method according to an embodiment of this application;
FIG. 3 is a flowchart of an example of a communication method according to an embodiment of this application;
FIG. 4 is a flowchart of an example of a communication method according to an embodiment of this application;
FIG. 5 is a flowchart of an example of a communication method according to an embodiment of this application;
FIG. 6 is a flowchart of an example of a communication method according to an embodiment of this application;
FIG. 7 is a schematic block diagram of a first apparatus according to an embodiment of this application;
FIG. 8 is another schematic block diagram of a first apparatus according to an embodiment of this application;
FIG. 9 is a schematic block diagram of a second apparatus according to an embodiment of this application;
FIG. 10 is another schematic block diagram of a second apparatus according to an embodiment of this application;
FIG. 11 is a schematic block diagram of a fourth apparatus according to an embodiment of this application;
FIG. 12 is another schematic block diagram of a fourth apparatus according to an embodiment of this application;
FIG. 13 is a schematic block diagram of a communication apparatus according to an embodiment of this application;
FIG. 14 is another schematic block diagram of a communication apparatus according to an embodiment of this application; and
FIG. 15 is still another schematic block diagram of a communication apparatus according to an embodiment of this application.

### DESCRIPTION OF EMBODIMENTS

To make objectives, technical solutions and advantages of embodiments of this application clearer, the following further describes embodiments of this application in detail with reference to the accompanying drawings.

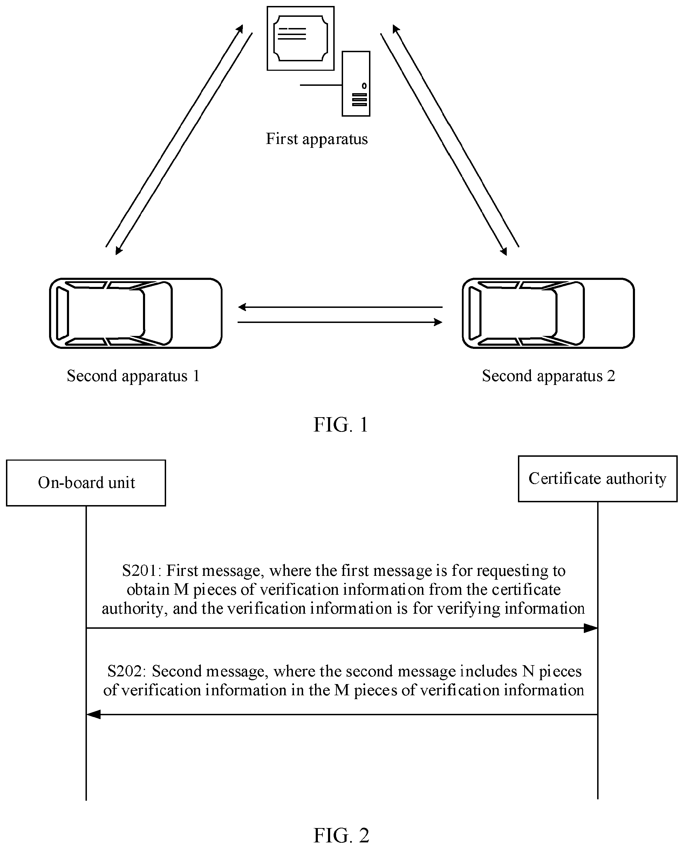

The technical solutions in embodiments of the present invention described below may be applied to different vehicle communication systems. FIG. 1 is an example of the communication system. The communication system may include a CA and a plurality of vehicles that communicate with the CA. FIG. 1 shows an example in which two vehicles are included. A communication device, for example, an in-vehicle apparatus, may be installed on a vehicle. The in-vehicle apparatus herein may be considered as a device placed or installed on the vehicle. One vehicle may be installed with one in-vehicle apparatus, or may be installed with a plurality of in-vehicle apparatuses. For example, a vehicle that can implement an autonomous driving function usually performs driving determining based on information provided by an ADAS system. The ADAS includes many sensors such as a camera, a millimeter-wave radar, an ultrasonic radar. These sensors may be considered as in-vehicle apparatuses. Alternatively, the following various terminal apparatuses located on the vehicle may also be considered as in-vehicle apparatuses.

A terminal apparatus may be a device that provides voice and/or data connectivity to a user, for example, may be a handheld device with a wireless connection function or a processing device connected to a wireless modem. The terminal apparatus may communicate with a core network through a radio access network (radio access network, RAN), and exchange a voice and/or data with the RAN. The terminal apparatus may be user equipment (user equipment, UE), a wireless terminal apparatus, a mobile terminal apparatus, a device-to-device (device-to-device, D2D) terminal apparatus, a V2X terminal apparatus, a machine-to-machine/machine-type communication (machine-to-machine/machine-type communication, M2M/MTC) terminal apparatus, an internet of things (internet of things, IoT) terminal apparatus, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), an aircraft (such as an uncrewed aerial vehicle, a hot air balloon, or a civil aviation passenger aircraft), user device (user device), or the like. For example, the terminal apparatus may be a mobile phone (or referred to as a "cellular" phone), a computer with a mobile terminal device, or a portable, pocket-sized, handheld, or computer built-in mobile apparatus. For example, the terminal apparatus may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal apparatus is also a limited device, for example, a device with low power consumption, a device with a limited storage capacity, or a device with a limited computing capability. For example, the terminal apparatus is an information sensing device such as a barcode, radio frequency identification (radio frequency identification, RFID), a sensor, a global positioning system (global positioning system, GPS), or a laser scanner.

By way of example but not limitation, in embodiments of this application, the in-vehicle apparatus placed or installed on the vehicle may also be a wearable device. The wearable device may also be referred to as a wearable intelligent device, an intelligent wearable device, or the like, and is a generic term for wearable devices that are developed by applying wearable technologies to intelligent designs of daily wear, such as glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

A vehicle may communicate with another device by using an in-vehicle apparatus, for example, an on-board unit (on board unit, OBU). In an electronic toll collection (electronic toll collection, ETC) system, the OBU may communicate with a roadside unit (roadside unit, RSU) when the vehicle passes through the RSU. In the ETC system, the OBU establishes a communication link with the RSU by using a dedicated short-range communication (dedicated short range communication, DSRC) technology, to perform processes such as vehicle identity recognition or electronic fee deduction without stopping the vehicle.

For another example, during autonomous driving, a vehicle A may communicate with a vehicle B, to ensure autonomous driving safety of the vehicle. Therefore, a V2X message between the vehicle A and the vehicle B needs to be authentic. A V2X message authenticity verification method is to verify authenticity of a V2X message based on a PKI certificate technology. To be specific, for a V2X message, if an in-vehicle apparatus serving as a receiver successfully verifies a signature of the V2X message and a used certificate, it is considered that the V2X message is authentic. The certificate herein is issued by a CA to the in-vehicle apparatus. To protect privacy of the in-vehicle apparatus, a PKI issues a plurality of certificates to the in-vehicle apparatus, for the in-vehicle apparatus to randomly select and use. In this specification, the certificate randomly selected and used by the in-vehicle apparatus may also be referred to as an anonymous certificate.

Currently, a manner of issuing, by the CA, an anonymous certificate to an in-vehicle apparatus is as follows: The CA directly sends the anonymous certificate to the in-vehicle apparatus based on a request of the in-vehicle apparatus. This manner may be considered as a synchronization mode. In another manner, the CA feeds back a download address of the anonymous certificate to the in-vehicle apparatus based on the request of the in-vehicle apparatus, and then the in-vehicle apparatus obtains the anonymous certificate based on the download address. This manner is referred to as an asynchronization mode relative to the synchronization mode. If there are a large quantity of in-vehicle apparatuses, and the in-vehicle apparatuses request an anonymous certificate from the CA at the same time, the CA needs to issue a large quantity of anonymous certificates at a time in the synchronization mode. This imposes a high requirement on performance of the CA. For example, currently, there are a large quantity of in-vehicle apparatuses. Limited by the performance of the CA, a part of in-vehicle apparatuses in the in-vehicle apparatuses needs to wait for a long period of time before receiving an anonymous certificate. Consequently, no anonymous certificate may be available for a lower-ranking in-vehicle apparatus within a period of time. In other words, an anonymous certificate obtaining delay of the lower-ranking in-vehicle apparatus is long, and efficiency is low. The CA does not need to issue an anonymous certificate to an in-vehicle apparatus immediately in the asynchronization mode. However, the in-vehicle apparatus needs to obtain verification information based on the download address. Consequently, a delay is long, and anonymous certificate issuing efficiency is still low. It can be learned that currently, a delay of verifying an in-vehicle device is long, and efficiency is low.

In view of this, the technical solutions in embodiments of this application are provided. In embodiments of this application, the verification information may be information that is provided by a first apparatus and that is used for verifying an identity of a second apparatus. A second message sent by the first apparatus to the second apparatus may include N pieces of verification information in M pieces of verification information. That is, the first apparatus may provide all or a part of the M pieces of verification information to the second apparatus. In this case, when there are a large quantity of second apparatuses, the first apparatus sends a part of verification information to the second apparatuses, so that the second apparatuses have available verification information; remaining verification information other than the part of the verification information may be subsequently provided to the second apparatuses, that is, the second apparatuses may obtain the remaining verification information when needing to use the remaining verification information. In this way, the first apparatus does not need to provide much verification information at a time, reducing a performance requirement for the first apparatus. In addition, because the part of verification information is currently available, the available verification information does not need to be obtained. This can improve efficiency of verifying the second apparatuses.

The following describes, with reference to the accompanying drawings, the technical solutions provided in embodiments of this application.

An embodiment of this application provides a communication method. FIG. 2 is a flowchart of the method. An example in which the method is applied to the network architecture shown in FIG. 1 is used in the following description process. In addition, the method may be performed by two communication apparatuses. The two communication apparatuses are, for example, a first apparatus and a second apparatus. The first apparatus may be a certificate authority or a communication apparatus (such as a chip system) that can support the certificate authority to implement functions of the method. Certainly, the first apparatus may alternatively be another communication apparatus. The second apparatus may be an in-vehicle apparatus or a communication apparatus (such as a chip system) that can support the in-vehicle apparatus to implement functions of the method. In addition, implementations of the first apparatus and the second apparatus are not limited. For example, the two communication apparatuses may be implemented in a same form. For example, both are implemented in a form of a device. Alternatively, the two communication apparatuses may be implemented in different forms. For example, the first apparatus is implemented in a form of a device, and the second apparatus is implemented in a form of a chip system. FIG. 1 shows an example in which two second apparatuses are included and the two second apparatuses are in-vehicle apparatuses is used. Both the two second apparatuses may communicate with the first apparatus, and the two second apparatuses may communicate with each other.

For ease of description, an example in which the method is performed by the first apparatus and the second apparatus is used in the following description. The first apparatus may be a certificate authority, or may be another apparatus that provides an anonymous certificate to the second apparatus. The first apparatus provides an anonymous certificate to the second apparatus, and the second apparatus may use the anonymous certificate to sign to-be-sent information. For example, when sending a message to a third apparatus, the second apparatus may sign the message by using the anonymous certificate, so that the third apparatus receives the message and verifies validity of the signature and the anonymous certificate in the message, to determine whether the message is authentic. It should be understood that, from this perspective, the anonymous certificate may also be considered as verification information. It should be understood that the verification information may further include information such as a public key of the second apparatus to sign a to-be-sent message.

The second apparatus may be carried in a vehicle, or the second apparatus may be a vehicle carrying a vehicle unit or another apparatus carrying an on-board unit. An implementation form of the second apparatus is not limited in embodiments of this application. The third apparatus communicating with the second apparatus may also be carried in a vehicle, or the third apparatus may be a vehicle carrying a vehicle unit or another apparatus carrying an on-board unit. An implementation form of the third apparatus is not limited in embodiments of this application. An example in which the first apparatus is a certificate authority and the second apparatus is an on-board unit is used in the following description.

S201: The on-board unit sends a first message to the certificate authority, and the certificate authority receives the first message from the on-board unit, where the first message is used for requesting to obtain M pieces of verification information from the certificate authority, and the verification information is used for verifying information.

The first message may be a message for requesting to obtain verification information from the certificate authority, for example, an anonymous certificate. The certificate authority may provide a plurality of anonymous certificates to each of a plurality of on-board units. When the on-board unit needs to use the anonymous certificate, the on-board unit may send the first message to the certificate authority. For example, when the on-board unit needs to send information to another on-board unit, to-be-sent information, for example, the first information, may need to be signed by using an anonymous certificate. In this case, the on-board unit may send the first message to the certificate authority. If the on-board unit obtains the anonymous certificate from the certificate authority, the on-board unit may sign the first information by using the anonymous certificate, and send the signed first information to the another on-board unit. The another on-board unit receives the first information, and verifies the first information, so as to determine that the first information sent by the on-board unit is authentic. It should be understood that the M pieces of verification information may be M anonymous certificates, where M is a positive integer, that is, M is an integer greater than or equal to 1. The M anonymous certificates may be all anonymous certificates issued by the certificate authority to the on-board unit.

S202: The certificate authority sends a second message to the on-board unit, and the on-board unit receives the second message from the certificate authority, where the second message includes N pieces of verification information in the M pieces of verification information.

The second message may be considered as a response message of the first message. The certificate authority receives the second message, and may select an appropriate quantity of pieces of verification information, for example, N pieces of verification information. The certificate authority selects N pieces of verification information and sends the N pieces of verification information to the on-board unit. The N pieces of verification information may be all of the M pieces of verification information, or may be a part of the M pieces of verification information.

In a manner of determining N, N may be determined based on a quantity of messages that are for requesting verification information and that are received by the certificate authority.

For example, when the quantity of messages that are for requesting the verification information and that are received by the certificate authority is less than a first threshold, M is equal to N.

The first threshold may be a possible value determined based on duration of the last on-board unit in the plurality of on-board units to obtain an anonymous certificate. For example, the first threshold may be 1500, 1800, or another possible value. Correspondingly, the duration of the on-board unit that is in the plurality of on-board units and that finally obtains the anonymous certificate may be greater than or equal to one minute. The certificate authority may store the first threshold. When the quantity of messages that are for requesting the verification information and that are received by the certificate authority is less than the first threshold, it may be considered that there is a small quantity of on-board units. That is, each of the plurality of on-board units sends a first message to the certificate authority, but a quantity of first messages received by the certificate authority from the on-board units is less than the first threshold. In this case, the certificate authority may determine that there is a small quantity of on-board units. In this case, to enable each of the on-board units to obtain the verification information quickly, the certificate authority may determine that N is equal to M. That is, the certificate authority may send all M pieces of verification information of each of the on-board units to the corresponding on-board unit at a time. Verification information issuing efficiency is high. In addition, a delay for each of the on-board units to obtain the verification information is short, so that each of the on-board units has available verification information in time.

It should be understood that, in this example manner, it may be considered that the certificate authority receives the first message, and the certificate authority sends all of the verification information to the on-board unit.

For another example, when the quantity of messages that are for requesting the verification information and that are received by the certificate authority is greater than or equal to the first threshold, the second message further includes a first address and/or time information. The first address is a download address of (M - N) pieces of verification information in the M pieces of verification information other than the N pieces of verification information, N is equal to 0, and the time information is time for obtaining the (M - N) pieces of verification information.

When the quantity of messages that are for requesting the verification information and that are received by the certificate authority is greater than or equal to the first threshold, it may be considered that there is a large quantity of on-board units. In this case, if the certificate authority sends all M pieces of verification information of each on-board unit to the corresponding on-board unit at a time, it is clear that a high performance requirement for the certificate authority is imposed. Therefore, the certificate authority may determine to send, to each of the on-board units, an address for downloading the verification information, for example, the first address, instead of directly sending the verification information to each of the on-board units. That is, a value of N is 0, and the second message includes the first address. This solution can reduce the performance requirement for the certificate authority.

It should be understood that, in this example manner, it may be considered that the certificate authority receives the first message, and the certificate authority sends, to the on-board unit, a download address for downloading all of the verification information.

It should be noted that, in one of the foregoing two example manners, the quantity of messages that are for requesting the verification information and that are received by the certificate authority may be less than or equal to the first threshold. In the other example manner, the quantity of messages that are for requesting the verification information and that are received by the certificate authority is greater than the first threshold. This is not limited in this embodiment of this application.

It should be noted that the first address may correspond to the first apparatus, for example, the certificate authority, that is, the verification information of each of the on-board units may be stored in the first apparatus. When requiring verification information, each of the on-board units may download the verification information from the first apparatus. Alternatively, the first address may correspond to another apparatus other than the first apparatus, for example, a third apparatus, which may be considered as another certificate authority. The third apparatus stores the verification information of each of the on-board units. When requiring verification information, each of the on-board units may download the verification information from the third apparatus.

In an alternative implementation, the second message includes time information. The time information may indicate a moment at which the certificate authority prepares the (M - N) pieces of verification information, that is, a moment at which the certificate authority may send the (M - N) pieces of verification information. In this case, the on-board unit requests, based on the time information, to obtain the (M - N) pieces of verification information. In this way, the following case can be avoided: The (M - N) pieces of verification information cannot be obtained because the on-board unit excessively early requests to obtain the (M - N) pieces of verification information. For example, the on-board unit requests to obtain the (M - N) pieces of verification information when the certificate authority has not obtained all of the (M - N) pieces of verification information; in this case, it is clear that the on-board unit cannot obtain the (M - N) pieces of verification information. This can also avoid the following problem: Because the on-board unit excessively late requests to obtain the (M - N) pieces of verification information, a long delay is caused, and verification information obtaining efficiency is low. It should be understood that, when the second message includes the time information, the first address corresponds to the first apparatus by default.

In another alternative implementation, the second message includes a first address and time information. When the second message includes the first address and the time information, the first address may correspond to the first apparatus, or may correspond to the third apparatus. In this manner, the first apparatus does not need to store much verification information, reducing the requirement on a storage capacity of the first apparatus. In addition, the second message includes the time information. This can avoid the following problem: The verification information cannot be obtained because the on-board unit excessively early requests to obtain the verification information; or because the on-board unit excessively late requests to obtain the verification information, a long delay is caused, and verification information obtaining efficiency is low.

For still another example, when the quantity of first request messages received by the certificate authority is greater than a second threshold, the second message further includes a first address and/or time information. The first address is a download address of (M - N) pieces of verification information in the M pieces of verification information other than the N pieces of verification information, N is an integer greater than or equal to 1 and less than M, and the time information is time for obtaining the (M - N) pieces of verification information.

Similar to the first threshold, the second threshold may also be a possible value determined based on the duration of the last on-board unit in the plurality of on-board units to obtain the anonymous certificate. For example, the second threshold may be 1500, 1800, or another possible value. The second threshold may be greater than the first threshold, and the certificate authority may store the second threshold. When the quantity of messages that are for requesting the verification information and that are received by the certificate authority is greater than the second threshold, it may be considered that there are more on-board units. In this case, the certificate authority may determine that N is an integer greater than or equal to 1 and less than M. In other words, the certificate authority may determine to send a part of verification information, that is, the N pieces of verification information, to the on-board unit, and notify the on-board unit of a manner of obtaining remaining verification information, that is, the (M - N) pieces of verification information. It should be noted that the certificate authority herein may determine that N is the integer greater than or equal to 1 and less than M, or may consider that N is the integer greater than or equal to 1 and less than M by default when the quantity of messages that are for requesting the verification information and that are received by the certificate authority is greater than the second threshold. In this way, the certificate authority does not need to provide much verification information at a time. This reduces a performance requirement for the certificate authority, and can ensure that each of the on-board units can currently have a part of verification information available. In addition, the second apparatus may further obtains the (M - N) pieces of verification information based on the first address optionally, so as to improve verification information obtaining efficiency as much as possible.

It should be understood that, in this example manner, it may be considered that the certificate authority receives the first message, and the certificate authority sends, to the on-board unit, a part of verification information in all of the verification information, and a download address for downloading the remaining verification information in all of the verification information other than the part of verification information.

In a manner in which the certificate authority notifies the on-board unit to obtain the (M - N) pieces of verification information, the second message may alternatively include time information. For example, the time information may indicate a moment at which the certificate authority prepares the (M - N) pieces of verification information, that is, a moment at which the certificate authority may send the (M - N) pieces of verification information. Therefore, the on-board unit requests to obtain (M - N) pieces of verification information based on the time information. This can avoid the following problem: The verification information cannot be obtained because the on-board unit excessively early requests to obtain the verification information; or because the on-board unit excessively late requests to obtain the verification information, a long delay is caused, and verification information obtaining efficiency is low. It should be understood that, when the second message includes the time information, the on-board unit obtains the (M - N) pieces of verification information from the first apparatus by default.

In another manner in which the certificate authority notifies the on-board unit to obtain the (M - N) pieces of verification information, the second message may alternatively include a first address and time information. The first address may correspond to the first apparatus, or may correspond to the third apparatus. In this manner, the first apparatus does not need to store much verification information, reducing the requirement on a storage capacity of the first apparatus. In addition, the second message includes the time information. This can avoid the following problem: The verification information cannot be obtained because the on-board unit excessively early requests to obtain the verification information; or because the on-board unit excessively late requests to obtain the verification information, a long delay is caused, and verification information obtaining efficiency is low.

It should be noted that the foregoing separately lists three example implementations. It should be understood that, in a possible implementation, when receiving the first message, the certificate authority may send the verification information to the on-board unit in any one of the foregoing three example implementations. That is, the following content is defined: The certificate authority sends all of the verification information to the on-board unit; the certificate authority sends, to the on-board unit, the download address for downloading all of the verification information; or the certificate authority sends, to the on-board unit, the part of verification information in all of the verification information, and the download address for downloading the remaining verification information in all of the verification information other than the part of the verification information. It should be understood that, in another possible implementation, the certificate authority receives the first message, and determines, based on a load status of the certificate authority, that is, the quantity of received messages for requesting the verification information, a specific to-be-used implementation in the three example implementations.

It should be noted that the time information may be a first moment, and the on-board unit sends the third message to the first apparatus or the third apparatus based on the first moment. In this case, the on-board unit does not need to calculate the first moment based on the time information. This reduces a calculation amount of the on-board unit. Alternatively, the time information may be first duration, and the on-board unit may determine a first moment based on the first duration and a current moment, to send the third message to the first apparatus or the third apparatus at the first moment. In this case, the first apparatus does not need to calculate the first moment. This reduces a calculation amount of the first apparatus.

When the on-board unit needs to obtain the verification information, the on-board unit may send the third message to the first apparatus or the third apparatus. The third message is used for requesting to download the (M - N) pieces of verification information from the first address. The first apparatus or the third apparatus receives the third message, and sends a fourth message to the on-board unit in response to the third message. The fourth message includes the (M - N) pieces of verification information.

For example, the second message includes the first address. If the first address corresponds to the first apparatus, the on-board unit receives the second message, and may send the third message to the first apparatus. If the first address corresponds to the third apparatus, the on-board unit receives the second message, and may send the third message to the third apparatus.

For example, if the second message includes the time information, the on-board unit determines, based on the time information, a first moment at which the on-board unit requests to obtain the (M - N) pieces of verification information, and sends the third message to the first apparatus or the third apparatus at the first moment. For example, if the second message includes only the time information, the second apparatus may send the third message to the first apparatus, so that the first apparatus sends the fourth message to the second apparatus.

For example, the second message includes the first address and the time information. In this case, the on-board unit determines, based on the time information, a first moment at which the on-board unit requests to obtain the (M - N) pieces of verification information, and sends the third message to the first apparatus or the third apparatus at the first moment. For example, if the first address corresponds to the first apparatus, the on-board unit receives the second message, and may send the third message to the first apparatus. If the first address corresponds to the third apparatus, the on-board unit receives the second message, and may send the third message to the third apparatus.

In a possible scenario, for example, a vehicle in which the on-board unit is located may be a special vehicle different from a common vehicle, for example, an ambulance or a police car. Alternatively, the on-board unit currently has no available valid verification information, but needs to use the verification information. In this case, it may be considered that the on-board unit needs to obtain verification information preferentially. Therefore, the first message sent by the on-board unit to the certificate authority may carry an identifier indicating a priority of obtaining verification information, for example, a first identifier. When the first message includes the first identifier, the certificate authority may determine to preferentially issue the verification information to the on-board unit. In a possible implementation, a priority of obtaining verification information by a common vehicle may be predefined as a first priority. If the priority indicated by the first identifier is higher than the first priority, it may be considered that the priority of obtaining the verification information by the on-board unit is higher. It should be understood that the priority indicated by the first identifier herein is relatively higher than the first priority. For example, if there are a plurality of vehicles, and all the plurality of vehicles are special vehicles, the first priority may be a predefined priority of a special vehicle. For example, the first priority is a priority of obtaining verification information by a police car, and the first identifier may be a priority of obtaining verification information by an ambulance. This is only intended to describe that the first priority is relative to the priority indicated by the first identifier, but does not constitute a limitation on a vehicle type.

If the first message includes the first identifier, the certificate authority may send all verification information to the on-board unit, that is, corresponding to the foregoing first example implementation. The technical solution can ensure as much as possible that the on-board unit can obtain the verification information in time, and that the on-board unit performs a service in time. For example, a special vehicle can obtain verification information in a timely manner without waiting all the time, ensuring that a service of the special vehicle is preferentially performed in an emergency.

Sometimes, the on-board unit actually is not an apparatus that needs to preferentially obtain the verification information, but the first message reported by the on-board unit still carries the first identifier. In this case, after the certificate authority receives the first message, if the certificate authority determines that the first message includes the first identifier, the certificate authority may verify authenticity of the first identifier in the first message, that is, verify the first message. For example, the certificate authority may compare the first identifier in the first message with an identifier corresponding to M pieces of verification information to be provided to the on-board unit. Because the identifier corresponding to the M pieces of verification information corresponds to the on-board unit, if the first identifier is consistent with the identifier corresponding to the M pieces of verification information, it may be determined that the on-board unit really needs to preferentially obtain the verification information. In this case, to enable the on-board unit to obtain the verification information quickly, the certificate authority may send all of the verification information to the on-board unit, that is, N is equal to M. However, if the first identifier is inconsistent with the identifier corresponding to the M pieces of verification information, the certificate authority determines that the on-board unit actually does not need to preferentially obtain the verification information. In this case, the certificate authority may determine that N is less than M, that is, the certificate authority may first provide a part of verification information to the on-board unit, to reduce a performance requirement for the certificate authority. In addition, verifying the authenticity of the first identifier in the first message by the certificate authority can avoid unfairness that is caused to another on-board unit because verification information is preferentially provided to the on-board unit based on the first identifier. It should be noted that the certificate authority may determine that N is less than M; or may consider that N is less than M when the first identifier is inconsistent with the identifier corresponding to the M pieces of verification information. The certificate authority does not necessarily perform a determining operation.

In another scenario, the first identifier may be added by another apparatus other than the on-board unit, for example, a fourth apparatus. When sending the first message, the on-board unit itself adds the first identifier. Therefore, even if the on-board unit does not need to preferentially obtain the verification information, the on-board unit still adds the first identifier. In view of this, this embodiment of this application provides the another scenario, that is, the fourth apparatus is added. The fourth apparatus may be considered as an agent platform. The on-board unit may send the first message to the fourth apparatus, and the fourth apparatus forwards the first message to the certificate authority. The agent platform may manage a plurality of certificate authorities, and each of the on-board unit may exchange information with each certificate authority by using the agent platform. The addition of the agent platform can avoid uncertainty of the certificate authority and simplify interface implementation complexity of the on-board unit. For example, there are a plurality of certificate authorities, and a part of the plurality of certificate authorities may have different interfaces; in this case, an interface of an on-board unit that exchanges information with the plurality of certificate authorities needs to satisfy interfaces of the plurality of certificate authorities. Alternatively, messages sent by a part of the plurality of certificate authorities are in different formats; in this case, the on-board unit that exchanges information with the plurality of certificate authorities needs to support different message formats, so as to parse the messages received from the plurality of certificate authorities. That is, a requirement on the interface of the on-board unit or the supported message format is high. The agent platform may receive the first message from the on-board unit; process the first message, for example, convert a format of the first message into a format that can be parsed by a certificate authority; and then send the first message to the certificate authority. It should be understood that, after receiving the second message from a certificate authority, the agent platform may process the second message, for example, convert a format of the second message into a format that can be parsed by the on-board unit; and then send the second message to the on-board unit. It should be understood that the agent platform may serve as a bridge between a plurality of on-board units and a plurality of certificate authorities, to avoid complex interface implementation of the on-board units that may be caused by uncertainty of the certificate authorities.

It should be understood that the second apparatus in this embodiment of this application may alternatively be a fourth apparatus. To be specific, the second apparatus may be an on-board unit, a vehicle, or an agent platform. The agent platform may manage a plurality of on-board units or vehicles, and exchange information with a certificate authority, for example, obtain an anonymous certificate from the certificate authority.

Based on whether the first message includes the first identifier or does not include the first identifier, the fourth apparatus forwards different first messages to the certificate authority.

For example, if the first message includes the first identifier, that is, when the on-board unit sends the first message, the on-board unit adds the first identifier to the first message. In this case, the fourth apparatus receives the first message and can determine authenticity of the first identifier. For example, the fourth apparatus may store information representing whether the on-board unit needs to preferentially obtain the verification information, for example, an identity of the on-board unit or information representing the identity of the on-board unit. The identity of the on-board unit is, for example, a license plate number of a vehicle in which the on-board unit is located. If the license plate number indicates that the vehicle is an ambulance, the on-board unit needs to obtain verification information preferentially. The information representing the identity of the on-board unit is, for example, information representing that the on-board unit currently has no available verification information. In this case, the on-board unit needs to obtain verification information preferentially. For ease of description, an example in which information representing whether the on-board unit needs to obtain verification information preferentially is an identity of an on-board unit is used in this embodiment of this application. The fourth apparatus may determine whether the first identifier is authentic. For example, if the first identifier is also an identity of the on-board unit, the fourth apparatus may compare the first identifier with a stored identity of the on-board unit. If the first identifier is consistent with the stored identity of the on-board unit, the fourth apparatus determines that the first message is authentic, and transparently transmits the first message to the certificate authority. If the first identifier is inconsistent with the stored identity of the on-board unit, the fourth apparatus may determine that the first message is not authentic, and the fourth apparatus may remove the first identifier from the first message and send the first message that does not include the first identifier to the certificate authority. This can avoid unfairness that may be caused to another on-board unit because the on-board unit adds the first identifier to the first message to preferentially obtain the verification information.

For example, if the first message does not include the first identifier, the fourth apparatus may add the first identifier to the first message depending on whether the on-board unit needs to preferentially obtain the verification information. If the on-board unit really needs to obtain verification information preferentially, the fourth apparatus adds the first identifier to the first message, and sends, to the certificate authority, the first message to which the first identifier is added. If the on-board unit does not need to preferentially obtain the verification information, the fourth apparatus transparently transmits the first message to the certificate authority. In this manner, the first identifier does not need to be added to each of the on-board units. This reduces implementation complexity of the on-board units, and reduces a requirement for vendors that provide the on-board units.

The following describes some sub-solutions in the embodiment in FIG. 2 by using examples, to better understand the technical solutions described in the embodiment shown in FIG. 2.

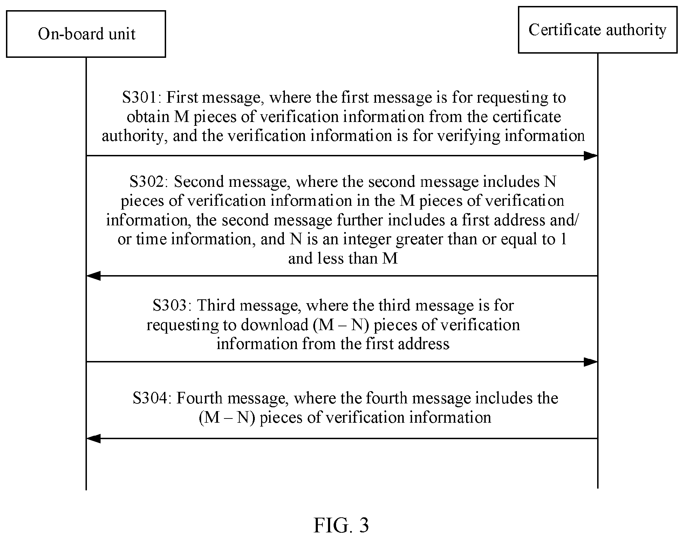

FIG. 3 shows a procedure of a first implementation of a communication method according to an embodiment of this application. The process shown in FIG. 3 uses an example in which apparatuses that perform the communication method are an on-board unit and a certificate authority, and an example of a manner of sending, by the certificate authority, a part of verification information and remaining verification information to the on-board unit by default.

S301: The on-board unit sends a first message to the certificate authority.

For description of the first message, refer to the description of S201 in the embodiment shown in FIG. 2.

S302: The certificate authority sends a second message to the on-board unit, where the second message includes N pieces of verification information in the M pieces of verification information, the second message further includes a first address and/or time information, and N is an integer greater than or equal to 1 and less than M.

For description of the first address and/or the time information, refer to the description of S202 in the embodiment shown in FIG. 2. The procedure shown in FIG. 3 uses an example in which the first address corresponds to the certificate authority.

S303: The on-board unit sends a third message to the certificate authority, where the third message is used for requesting to download (M - N) pieces of verification information from the first address.

S304: The on-board unit receives a fourth message from the certificate authority, where the fourth message includes the (M - N) pieces of verification information.

For some specific implementation details of the steps in the procedure shown in FIG. 3, refer to related description of the embodiment shown in FIG. 2.

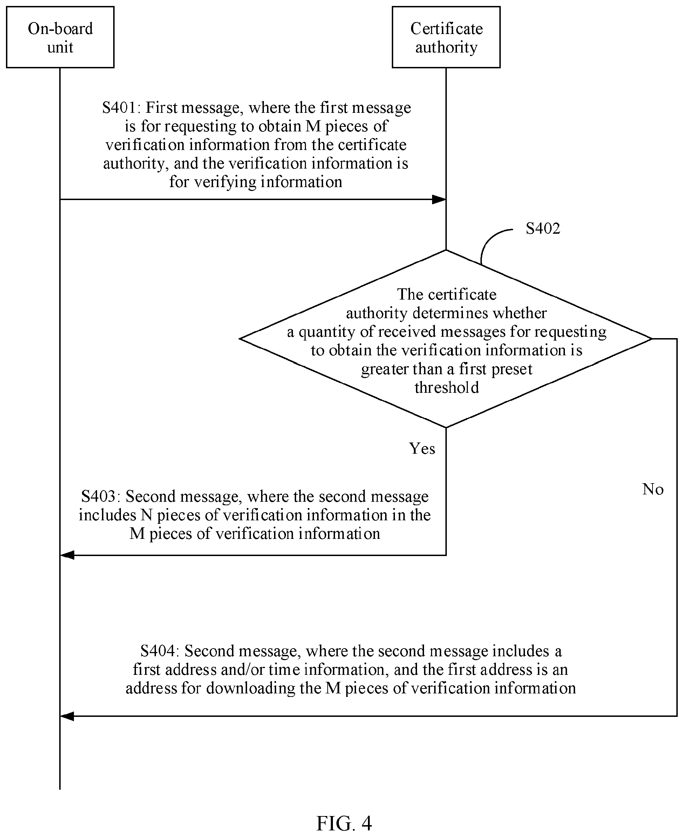

FIG. 4 shows a procedure of a second implementation of a communication method according to an embodiment of this application. The procedure shown in FIG. 4 uses an example in which apparatuses that perform the communication method are an on-board unit and a certificate authority, and an example of a manner of determining, by the certificate authority based on a value of a quantity of received messages for requesting to obtain verification information, to send the verification information to the on-board unit.

S401: The on-board unit sends a first message to the certificate authority.

For description of the first message, refer to the description of S201 in the embodiment shown in FIG. 2.

S402: The certificate authority determines whether a quantity of received messages for requesting to obtain the verification information is greater than a first preset threshold.

S403: The certificate authority sends a second message to the on-board unit when the quantity of messages for requesting to obtain the verification information is less than or equal to the first preset threshold, where the second message includes N pieces of verification information in the M pieces of verification information.

S404: The certificate authority sends a second message to the on-board unit when the quantity of messages for requesting to obtain the verification information is greater than the first preset threshold, where the second message includes a first address and/or time information, and the first address is an address for downloading the M pieces of verification information.

For description of the first address and/or the time information, refer to the description of S202 in the embodiment shown in FIG. 2. The procedure shown in FIG. 3 uses an example in which the first address corresponds to the certificate authority.

It should be understood that the first preset threshold may be determined based on a quantity of messages that are currently received by the certificate authority and that are for requesting to obtain verification information or a quantity of messages that are currently not processed and that are for requesting to obtain verification information. The first preset threshold may be the foregoing first threshold, may be the foregoing second threshold, or may be another possible value other than the first threshold and the second threshold. This is not limited in this embodiment of this application.

For some specific implementation details of the steps in the procedure shown in FIG. 4, refer to related description of the embodiment shown in FIG. 2.

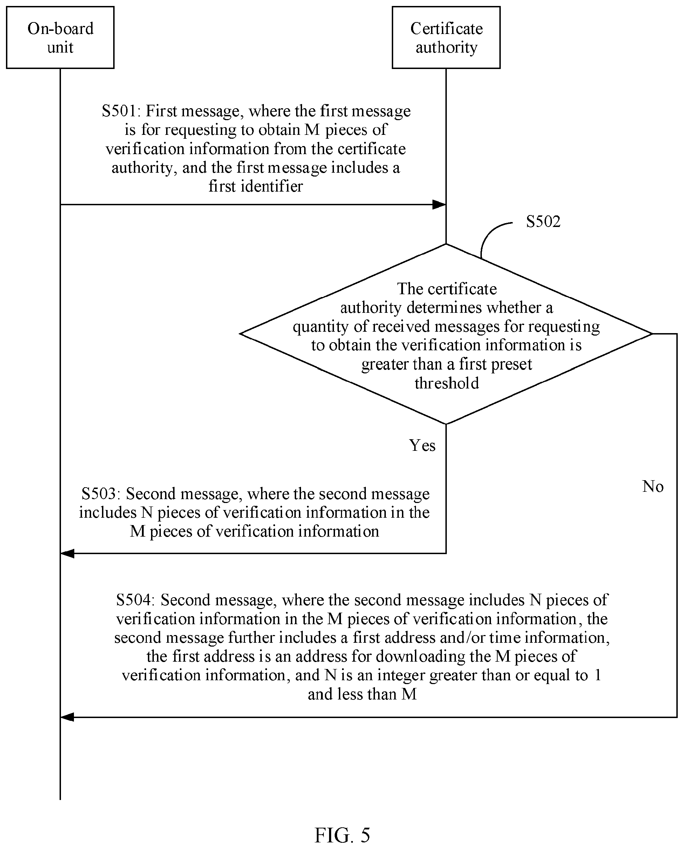

FIG. 5 shows a procedure of a third implementation of a communication method according to an embodiment of this application. The procedure shown in FIG. 5 uses an example in which apparatuses that perform the communication method are an on-board unit and a certificate authority, an example of a manner of determining, by the certificate authority based on a value of a quantity of received messages for requesting to obtain verification information, to send the verification information to the on-board unit, where a first message includes a first identifier.

S501: The on-board unit sends a first message to the certificate authority, where the first message includes a first identifier.

For description of the first message, refer to the description of S201 in the embodiment shown in FIG. 2.

S502: The certificate authority determines whether a quantity of received messages for requesting to obtain the verification information is greater than a first preset threshold.

S503: The certificate authority sends a second message to the on-board unit when the quantity of messages for requesting to obtain the verification information is less than or equal to the first preset threshold, where the second message includes N pieces of verification information in the M pieces of verification information.

S504: The certificate authority sends a second message to the on-board unit when the quantity of messages for requesting to obtain the verification information is greater than the first preset threshold, where the second message includes N pieces of verification information in the M pieces of verification information, the second message further includes a first address and/or time information, the first address is an address for downloading the M pieces of verification information, and N is an integer greater than or equal to 1 and less than M.

For description of the first address and/or the time information, refer to the description of S202 in the embodiment shown in FIG. 2. The procedure shown in FIG. 3 uses an example in which the first address corresponds to the certificate authority.

It should be understood that the first preset threshold may be determined based on a quantity of messages that are currently received by the certificate authority and that are for requesting to obtain verification information or a quantity of messages that are currently not processed and that are for requesting to obtain verification information. The first preset threshold may be the foregoing first threshold, may be the foregoing second threshold, or may be another possible value other than the first threshold and the second threshold. This is not limited in this embodiment of this application.

For some specific implementation details of the steps in the procedure shown in FIG. 5, refer to related description of the embodiment shown in FIG. 2.

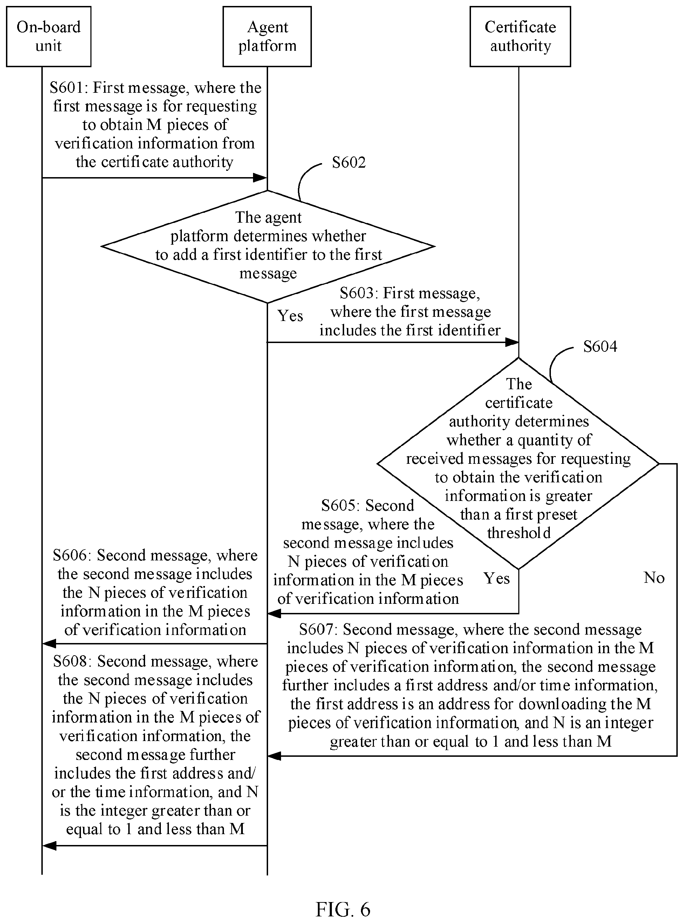

FIG. 6 shows a procedure of a third implementation of a communication method according to an embodiment of this application. The procedure shown in FIG. 6 shows an example in which apparatuses that perform the communication method are an on-board unit, a certificate authority, and an agent platform.

S601: The on-board unit sends a first message to the agent platform.

For description of the first message, refer to the description of S201 in the embodiment shown in FIG. 2.

S602: The agent platform determines whether to add a first identifier to the first message.

For description of the first message, refer to the description of S202 in the embodiment shown in FIG. 2.

S603: The agent platform sends a first message to the certificate authority, where the first message includes the first identifier.

S604: The certificate authority determines whether a quantity of received messages for requesting to obtain the verification information is greater than a first preset threshold.

S605: The certificate authority sends a second message to the agent platform when the quantity of messages for requesting to obtain the verification information is less than or equal to the first preset threshold, where the second message includes N pieces of verification information in the M pieces of verification information.

S606: The agent platform sends the second message to the on-board unit.

S607: The certificate authority sends a second message to the agent platform when the quantity of messages for requesting to obtain the verification information is greater than the first preset threshold, where the second message includes N pieces of verification information in the M pieces of verification information, the second message further includes a first address and/or time information, the first address is an address for downloading the M pieces of verification information, and N is an integer greater than or equal to 1 and less than M.

S608: The agent platform sends the second message to the on-board unit.

For description of the first address and/or the time information, refer to the description of S202 in the embodiment shown in FIG. 2. The procedure shown in FIG. 6 uses an example in which the first address corresponds to the certificate authority.

It should be understood that a sequence of performing step S605 and step S607 is not limited.

The agent platform may determine to add the first identifier to the first message, and the on-board unit does not need to perform the operation. This simplifies logic of the on-board unit.

In this embodiment of this application, the first apparatus may send a part of verification information to the second apparatus, to first ensure that the second apparatus has available verification information; and subsequently provide remaining verification information other than the part of verification information to the second apparatus, that is, the remaining verification information may be obtained when the second apparatus needs to use the remaining verification information. In this way, the first apparatus does not need to provide much verification information at a time, reducing a performance requirement for the first apparatus. In addition, because the part of verification information is currently available, the available verification information does not need to be obtained. This improves efficiency of verifying the second apparatus.

In addition, in this embodiment of this application, the fourth apparatus may receive the first message from the second apparatus, so that the second apparatus may not add the first identifier. Whether the first identifier is added to the first message may be determined by the fourth apparatus. In this case, the second apparatus may add the first identifier to the first message to preferentially obtain the verification information, causing unfairness to other second apparatuses. In addition, the fourth apparatus acts as an intermediate unit for interaction between the second apparatus and the first apparatus. This can avoid incompatibility between a plurality of first apparatuses and a plurality of second apparatuses that is caused by different implementations.

In the foregoing embodiments provided in this application, the methods provided in embodiments of this application are described from perspectives of the first apparatus, the second apparatus, and interaction between the first apparatus and the second apparatus. To implement functions in the foregoing methods provided in embodiments of this application, the first apparatus and the second apparatus may include a hardware structure and/or a software module, to implement the foregoing functions in a form of the hardware structure, the software module, or a combination of the hardware structure and the software module. Whether a specific function in the foregoing functions is performed by the hardware structure, the software module, or the combination of the hardware structure and the software module depends on specific applications and design constraints of the technical solutions.

The following describes, with reference to the accompanying drawings, apparatuses configured to implement the foregoing methods in embodiments of this application. Therefore, all the foregoing content may be used in the following embodiments. Repeated content is not described again.

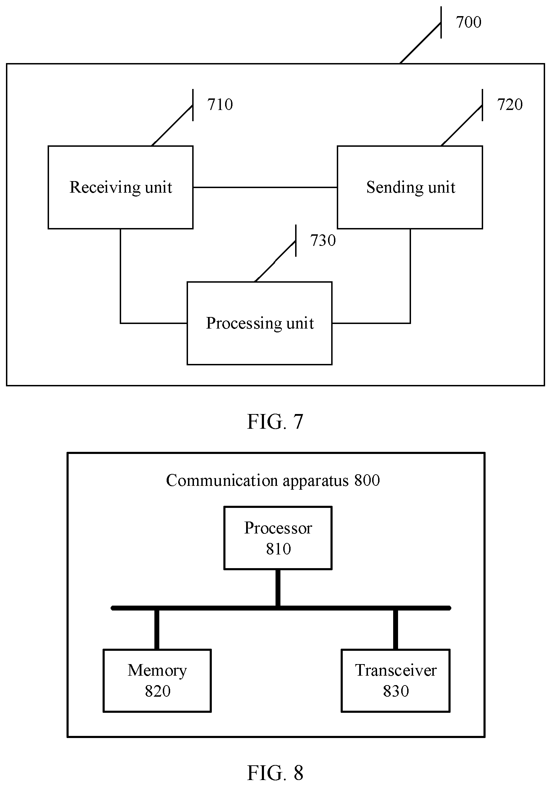

FIG. 7 is a schematic block diagram of a communication device 700 according to an embodiment of this application. The communication apparatus 700 can perform behaviors and functions of the first apparatus in the foregoing method embodiments. Details are not described herein again, to avoid repetition. The communication apparatus 700 may be a first apparatus 700, or may be a chip used in the first apparatus 700. The communication apparatus 700 may include a receiving unit 710 and a sending unit 720, and may further include a processing unit 730. The receiving unit 710, the sending unit 720, and the processing unit 730 each may be a logical function module. The processing unit 730 is configured to perform all operations, except sending and receiving operations, performed by the first apparatus in embodiments shown in FIG. 2, FIG. 3, FIG. 4, FIG. 5, and FIG. 6; and/or configured to support another process of the technology described in this specification. The receiving unit 710 and the sending unit 720 may be configured to perform all receiving or sending operations performed by the first apparatus in embodiments shown in FIG. 2, FIG. 3, FIG. 4, FIG. 5, and FIG. 6, for example, S201 and S202 in the embodiment shown in FIG. 2, and/or configured to support another process of the technology described in this specification.

For example, controlled by the processing unit 730, the receiving unit 710 may receive data, and the sending unit 720 may send data. Details are as follows:

The receiving unit 710 is configured to receive a first message from a second apparatus. The first message is used for requesting to obtain M pieces of verification information from the communication apparatus, the verification information is used for verifying information, and M is a positive integer.

The sending unit 720 is configured to send a second message to the second apparatus. The second message includes N pieces of verification information in the M pieces of verification information, and N is an integer.

In an optional implementation, the processing unit 730 may be configured to determine the following content:

When a quantity of messages that are for requesting verification information and that are received by the receiving unit 710 is less than a first threshold, M is equal to N;
when the quantity of messages that are for requesting the verification information and that are received by the receiving unit 710 is greater than or equal to the first threshold, the second message further includes a first address and/or time information, where the first address is a download address of (M - N) pieces of verification information in the M pieces of verification information other than the N pieces of verification information, N is equal to 0, and the time information is time for obtaining the (M - N) pieces of verification information; or
when the quantity of first request messages received by the receiving unit 710 is greater than a second threshold, the second message further includes a first address and/or time information, where the first address is a download address of (M - N) pieces of verification information in the M pieces of verification information other than the N pieces of verification information, N is an integer greater than or equal to 1 and less than M, and the time information is time for obtaining the (M - N) pieces of verification information.

In an optional implementation, the first message includes a first identifier, and the second message includes the M pieces of verification information. The first identifier indicates that a priority of the first message is higher than a first priority.

In an optional implementation, the processing unit 730 may be configured to:
determine whether the first identifier is consistent with an identifier corresponding to the M pieces of verification information; and
when determining that the first identifier is inconsistent with the identifier corresponding to the M pieces of verification information, determine that N is less than M.

It should be understood that the processing unit 730 in this embodiment of this application may be implemented by a processor or a processor-related circuit component, and the receiving unit 710 and the sending unit 720 may be implemented by a transceiver or a transceiverrelated circuit component.

As shown in FIG. 8, an embodiment of this application further provides a communication apparatus 800. For example, the communication apparatus 800 is a first apparatus 800. The first apparatus 800 includes a processor 810, a memory 820, and a transceiver 830. The memory 820 stores instructions or a program. The processor 810 is configured to execute the instructions or the program stored in the memory 820. When the instructions or the program stored in the memory 820 is executed, the processor 810 is configured to perform operations performed by the processing unit 730 in the foregoing embodiment, and the transceiver 830 is configured to perform operations performed by the receiving unit 710 and the sending unit 720 in the foregoing embodiment.

It should be understood that the first apparatus 700 or the first apparatus 800 in this embodiment of this application may correspond to the first apparatus in embodiments shown in FIG. 2, FIG. 3, FIG. 4, FIG. 5, and FIG. 6, and operations and/or functions of the modules in the first apparatus 700 or the first apparatus 800 are separately intended to perform corresponding procedures in embodiments shown in FIG. 2, FIG. 3, FIG. 4, FIG. 5, and FIG. 6. For brevity, details are not described herein again.

It should be understood that the communication apparatus 800 shown in FIG. 8 may be a chip or a circuit, for example, a chip or a circuit that may be disposed in a certificate authority. Further, the communication apparatus 800 may include a bus system.

The processor 810, the memory 820, and the transceiver 830 are connected by using the bus system. The processor 810 is configured to execute the instructions stored in the memory 820, to control the transceiver 830 to receive a signal, and control the transceiver 830 to send a signal, so as to complete the steps of the first apparatus in the communication method in this application. The transceiver 830 may be replaced with a receiver and a transmitter, and the receiver and the transmitter may be a same physical entity or different physical entities. When the receiver and the transmitter are a same physical entity, the receiver and the transmitter may be collectively referred to as a transceiver. The memory 820 may be integrated into the processor 810, or may be separated from the processor 810.

In an implementation, it may be considered that functions of the transceiver 830 are implemented by a transceiver circuit or a dedicated transceiver chip. It may be considered that the processor 810 is implemented by using a dedicated processing chip, a processing circuit, a processor or a general-purpose chip.

A specific connection medium between the processor 810, the memory 820, and the transceiver 830 is not limited in this embodiment of this application. In this embodiment of this application, the processor 810, the memory 820, and the transceiver 830 are connected through a bus in FIG. 8. The bus is represented by a bold line in FIG. 8. A mode of connection between other components is schematically described, and is not limited thereto. The bus may be classified into an address bus, a data bus, a control bus, and the like. For ease of representation, only one thick line is used for representing the bus in FIG. 8, but this does not mean that there is only one bus or only one type of bus.

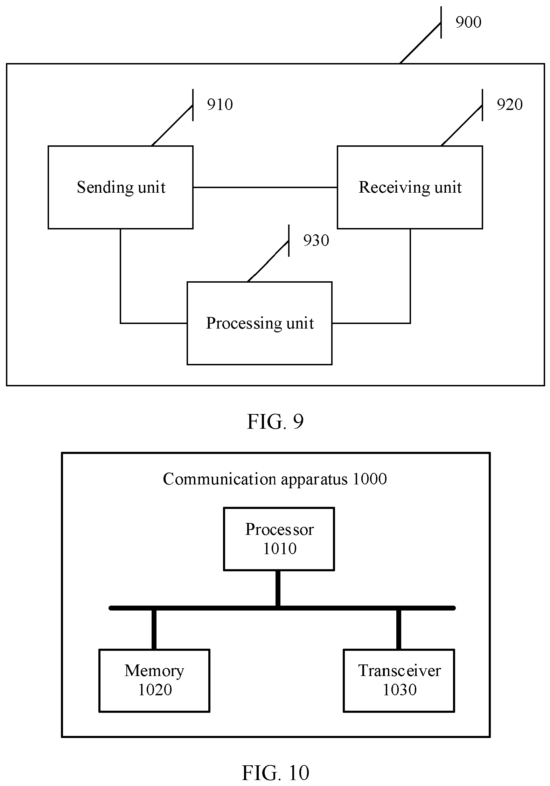

FIG. 9 is a schematic block diagram of a communication apparatus 900 according to an embodiment of this application. The communication apparatus 900 can perform behaviors and functions of the second apparatus in the foregoing method embodiment. Details are not described herein again, to avoid repetition. For example, the communication apparatus 900 may be a second apparatus 900, or may be a chip used in the second apparatus 900. The communication apparatus 900 is, for example, the second apparatus 900. The second apparatus 900 includes a sending unit 910, a receiving unit 920, and a processing unit 930. The sending unit 910, the receiving unit 920, and the processing unit 930 each may be a logical function module.

The processing unit 930 may be configured to perform all operations, except sending and receiving operations, performed by the second apparatus in embodiments shown in FIG. 2, FIG. 3, FIG. 4, FIG. 5, and FIG. 6; and/or configured to support another process of the technology described in this specification. The sending unit 910 and the receiving unit 920 may be configured to perform all receiving or sending operations performed by the second apparatus in embodiments shown in FIG. 2, FIG. 3, FIG. 4, FIG. 5, and FIG. 6; and/or configured to support another process of the technology described in this specification.

For example, the sending unit 910 is configured to send a first message to a first apparatus. The first message is used for requesting to obtain M pieces of verification information from the first apparatus, each of the M pieces of verification information is used for signing a message before the communication apparatus sends the message, and M is a positive integer.

The receiving unit 920 is configured to receive a second message from the first apparatus. The second message includes N pieces of verification information in the M pieces of verification information, and N is an integer.

In an optional implementation, M is equal to N;
the second message further includes a first address and/or time information, where the first address is a download address of (M - N) pieces of verification information in the M pieces of verification information other than the N pieces of verification information, N is equal to 0, and the time information is time for obtaining the (M - N) pieces of verification information; or
the second message further includes a first address and/or time information, where the first address is a download address of (M - N) pieces of verification information in the M pieces of verification information other than the N pieces of verification information, N is an integer greater than or equal to 1 and less than M, and the time information is time for obtaining the (M - N) pieces of verification information.

In an optional implementation, the first message includes a first identifier, the second message includes the M pieces of verification information. The first identifier indicates that a priority of the first message is higher than a first priority.

In an optional implementation, the sending unit 910 is further configured to send a third message to a third apparatus. The third message is used for requesting to download the (M - N) pieces of verification information from the first address.

The receiving unit is further configured to receive a fourth message from the third apparatus. The fourth message includes the (M - N) pieces of verification information.

In an optional implementation, the processing unit 930 may be further configured to determine, based on the time information, a first moment at which the (M - N) pieces of verification information are downloaded from the first address.

The sending unit 910 is further configured to send the third message to the third apparatus at the first moment under control of the processing unit 930.

It should be understood that the processing unit 930 in this embodiment of this application may be implemented by a processor or a processor-related circuit component, and the sending unit 910 and the receiving unit 920 may be implemented by a transceiver or a transceiverrelated circuit component.

As shown in FIG. 10, an embodiment of this application further provides a communication apparatus 1000. For example, the communication apparatus 1000 is a second apparatus 1000. The second apparatus 1000 includes a processor 1010, a memory 1020, and a transceiver 1030. The memory 1020 stores instructions or a program. The processor 1010 is configured to execute the instructions or the program stored in the memory 1020. When the instructions or the program stored in the memory 1020 is executed, the processor 1010 is configured to perform operations performed by the processing unit 930 in the foregoing embodiment, and the transceiver 1030 is configured to perform operations performed by the sending unit 910 and the receiving unit 920 in the foregoing embodiment.

It should be understood that the second apparatus 900 or the second apparatus 1000 in this embodiment of this application may correspond to the second apparatus in embodiments shown in FIG. 2, FIG. 3, FIG. 4, FIG. 5, and FIG. 6, and operations and/or functions of modules in the second apparatus 900 or the second apparatus 1000 are separately intended to perform corresponding procedures in embodiments shown in FIG. 2, FIG. 3, FIG. 4, FIG. 5, and FIG. 6. For brevity, details are not described herein again.

It should be understood that the communication apparatus 1000 shown in FIG. 10 may be a chip or a circuit, for example, a chip or a circuit that may be disposed in a certificate authority. Further, the communication apparatus 1000 may include a bus system.

The processor 1010, the memory 1020, and the transceiver 1030 are connected by using the bus system. The processor 1010 is configured to execute the instructions stored in the memory 1020, to control the transceiver 1030 to receive a signal, and control the transceiver 1030 to send a signal, so as to complete the steps of the second apparatus in the communication method in this application. The transceiver 1030 may be replaced with a receiver and a transmitter, and the receiver and the transmitter may be a same physical entity or different physical entities. When the receiver and the transmitter are a same physical entity, the receiver and the transmitter may be collectively referred to as a transceiver. The memory 1020 may be integrated into the processor 1010, or may be separated from the processor 1010.

In an implementation, it may be considered that functions of the transceiver 1030 are implemented by a transceiver circuit or a dedicated transceiver chip. It may be considered that the processor 1010 is implemented by using a dedicated processing chip, a processing circuit, a processor or a general-purpose chip.

A specific connection medium between the processor 1010, the memory 1020, and the transceiver 1030 is not limited in this embodiment of this application. In this embodiment of this application, the processor 1010, the memory 1020, and the transceiver 1030 are connected through a bus in FIG. 10. The bus is represented by a bold line in FIG. 10. A mode of connection between other components is schematically described, and is not limited thereto. The bus may be classified into an address bus, a data bus, a control bus, and the like. For ease of representation, only one thick line is used for representing the bus in FIG. 10, but this does not mean that there is only one bus or only one type of bus.

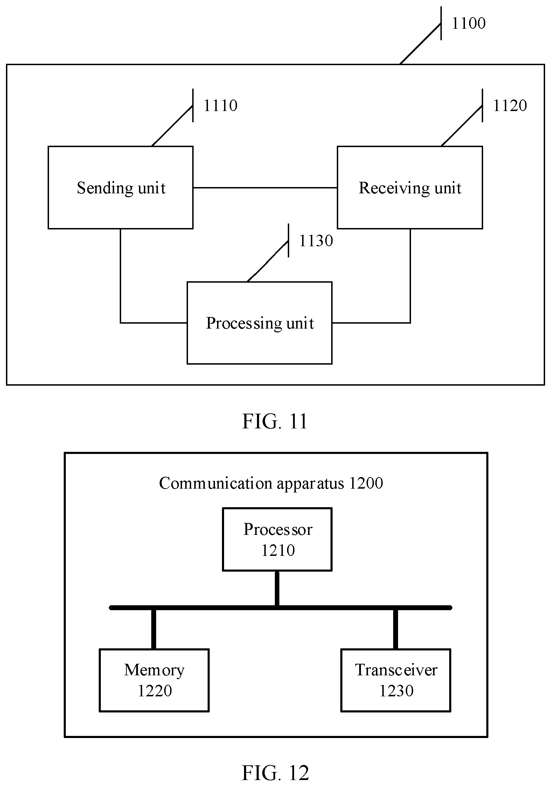

FIG. 11 is a schematic block diagram of a communication apparatus 1100 according to an embodiment of this application. The communication apparatus 1100 can perform behaviors and functions of the fourth apparatus in the foregoing method embodiment. Details are not described herein again, to avoid repetition. For example, the communication apparatus 1100 may be a fourth apparatus 1100, or may be a chip used in the fourth apparatus 1100. The communication apparatus 1100 is, for example, the fourth apparatus 1100. The fourth apparatus 1100 includes a sending unit 1110, a receiving unit 1120, and a processing unit 1130. The sending unit 1110, the receiving unit 1120, and the processing unit 1130 each may be a logical function module.

The processing unit 1130 may be configured to perform all operations, except sending and receiving operations, performed by the fourth apparatus in the embodiment shown in FIG. 6; and/or configured to support another process of the technology described in this specification. The sending unit 1110 and the receiving unit 1120 may be configured to perform all receiving or sending operations performed by the fourth apparatus in the embodiment shown in FIG. 6, and/or configured to support another process of the technology described in this specification.

For example, the receiving unit 1120 is configured to receive a first message from a second apparatus. The first message is used for requesting to obtain M pieces of verification information from the first apparatus, the verification information is used for verifying information, and M is a positive integer.

The processing unit 1130 is configured to determine, based on an identity of the second apparatus, whether to add a first identifier to the first message. The first identifier indicates that a priority of the first message is higher than a first priority.

The sending unit 1110 is configured to: when the priority of the first message is higher than the first priority, send the first message carrying the first identifier to the first apparatus.

It should be understood that the processing unit 1130 in this embodiment of this application may be implemented by a processor or a processor-related circuit component, and the sending unit 1110 and the receiving unit 1120 may be implemented by a transceiver or a transceiverrelated circuit component.

As shown in FIG. 12, an embodiment of this application further provides a communication apparatus 1200. For example, the communication apparatus 1200 is a fourth apparatus 1200. The fourth apparatus 1200 includes a processor 1210, a memory 1220, and a transceiver 1230. The memory 1220 stores instructions or a program. The processor 1210 is configured to execute the instructions or the program stored in the memory 1220. When the instructions or the program stored in the memory 1220 is executed, the processor 1210 is configured to perform operations performed by the processing unit 1130 in the foregoing embodiment, and the transceiver 1230 is configured to perform operations performed by the sending unit 1110 and the receiving unit 1120 in the foregoing embodiment.

It should be understood that the fourth apparatus 1100 or the fourth apparatus 1200 in this embodiment of this application may correspond to the fourth apparatus in the embodiment shown in FIG. 6, and operations and/or functions of modules in the fourth apparatus 1100 or the fourth apparatus 1200 are separately intended to perform corresponding procedures in the embodiment shown in FIG. 6. For brevity, details are not described herein again.

It should be understood that the communication apparatus 1200 shown in FIG. 12 may be a chip or a circuit, for example, a chip or a circuit that may be disposed in an agent platform. Further, the communication apparatus 1200 may include a bus system.

The processor 1210, the memory 1220, and the transceiver 1230 are connected by using the bus system. The processor 1210 is configured to execute the instructions stored in the memory 1220, to control the transceiver 1230 to receive a signal, and control the transceiver 1230 to send a signal, so as to complete the steps of the second apparatus in the communication method in this application. The transceiver 1230 may be replaced with a receiver and a transmitter, and the receiver and the transmitter may be a same physical entity or different physical entities. When the receiver and the transmitter are a same physical entity, the receiver and the transmitter may be collectively referred to as a transceiver. The memory 1220 may be integrated into the processor 1210, or may be separated from the processor 1210.

In an implementation, it may be considered that functions of the transceiver 1230 are implemented by a transceiver circuit or a dedicated transceiver chip. It may be considered that the processor 1210 is implemented by using a dedicated processing chip, a processing circuit, a processor or a general-purpose chip.

A specific connection medium between the processor 1210, the memory 1220, and the transceiver 1230 is not limited in this embodiment of this application. In this embodiment of this application, the processor 1210, the memory 1220, and the transceiver 1230 are connected through a bus in FIG. 12. The bus is represented by a bold line in FIG. 12. A mode of connection between other components is schematically described, and is not limited thereto. The bus may be classified into an address bus, a data bus, a control bus, and the like. For ease of representation, only one thick line is used for representing the bus in FIG. 12, but this does not mean that there is only one bus or only one type of bus.

In embodiments of this application, the processor 810, the processor 1010, and the processor 1210 each may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware and software modules in the processor.

In embodiments of this application, the memory 820, the memory 1020, and the memory 1220 each may be a nonvolatile memory such as a hard disk drive (hard disk drive, HDD) or a solid-state drive (solid-state drive, SSD), or may be a volatile memory (volatile memory) such as a random-access memory (random-access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

It should be noted that the communication apparatus in the foregoing embodiments may be an on-board unit, a vehicle, or a certificate authority; may be a circuit; or may be a chip used in the on-board unit, or another combined device, component, or the like that has the foregoing an-vehicle function. When the communication apparatus is an on-board unit, the transceiver unit may be a transceiver, and may include an antenna, a radio frequency circuit, and the like. The processing module may be a processor, for example, a central processing unit (central processing unit, CPU). When the communication apparatus is a component having functions of the terminal device, the transceiver unit may be a radio frequency unit, and the processing module may be the processor. When the communication apparatus is a chip system, the transceiver unit may be an input/output interface of the chip system, and the processing module may be a processor of the chip system.

An embodiment of this application further provides a communication apparatus. The communication apparatus may be an in-vehicle apparatus or a circuit. The communication apparatus may be configured to perform actions performed by the first apparatus in the foregoing method embodiments.

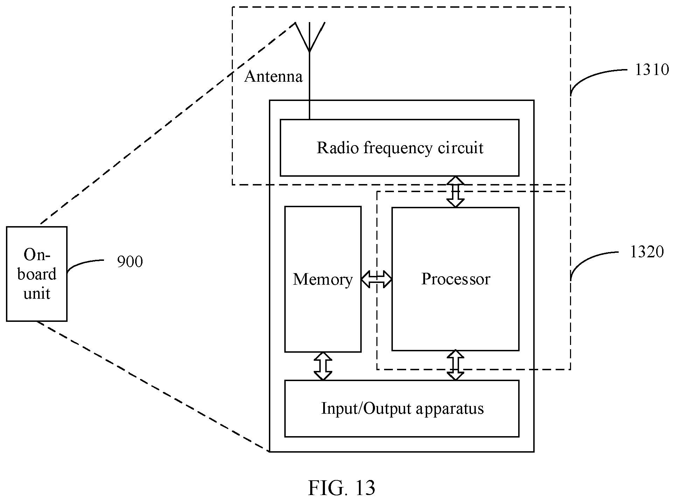

FIG. 13 is a schematic diagram of a structure of a simplified in-vehicle apparatus. For ease of understanding and illustration, FIG. 13 shows an example in which the in-vehicle apparatus is an on-board unit. As shown in FIG. 13, the on-board unit includes a processor, a memory, a radio frequency circuit, an antenna, and an input/output apparatus. The processor is mainly configured to: process a communication protocol and communication data, control the on-board unit, execute a software program, and process data of the software program. The memory is mainly configured to store the software program and the data. The radio frequency circuit is mainly configured to: perform conversion between a baseband signal and a radio frequency signal and process the radio frequency signal. The antenna is mainly configured to send and receive a radio frequency signal in a form of an electromagnetic wave. The input/output apparatus, for example, a touchscreen, a display, or a keyboard, is mainly configured to: receive data input by a user and output data to the user. It should be noted that some types of devices may have no input/output apparatus.

When there is data to be sent, the processor performs baseband processing on the to-be-sent data, and outputs a baseband signal to the radio frequency circuit. The radio frequency circuit performs radio frequency processing on the baseband signal, and then sends a radio frequency signal to an external device in a form of an electromagnetic wave through an antenna. When data is sent to the device, the radio frequency circuit receives a radio frequency signal through the antenna, converts the radio frequency signal into a baseband signal, and outputs the baseband signal to the processor; and the processor converts the baseband signal into data, and processes the data. For ease of description, only one memory and one processor are shown in FIG. 13. In an actual device product, there may be one or more processors and one or more memories. The memory may also be referred to as a storage medium, a storage device, or the like. The memory may be disposed independent of the processor or may be integrated with the processor. This is not limited in this embodiment of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 13, the apparatus includes a transceiver unit 1310 and a processing unit 1320. The transceiver unit may also be referred to as a transceiver, a transceiver machine, a transceiver apparatus, or the like. The processing unit 1320 may also be referred to as a processor a processing board, a processing module, a processing apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit 1310 includes the receiving unit and the sending unit. The transceiver unit 1310 sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 1310 is configured to perform a sending operation and a receiving operation on a side of the first apparatus in the foregoing method embodiments, and the processing unit 1320 is configured to perform an operation other than the receiving operation and the sending operation of the first apparatus in the foregoing method embodiments.

For example, in an implementation, the transceiver unit 1310 may be configured to perform S201 and S202 in the embodiment shown in FIG. 2, and/or support another process of the technology described in this specification.

For another example, in an implementation, the transceiver unit 1310 may be configured to perform S301, S302, S303, and S304 in the embodiment shown in FIG. 3, and/or support another process of the technology described in this specification.

For another example, in an implementation, the transceiver unit 1310 may be configured to perform S401, S403, and S404 in the embodiment shown in FIG. 4, and/or support another process of the technology described in this specification.

For another example, in an implementation, the transceiver unit 1310 may be configured to perform S501, S503, and S504 in the embodiment shown in FIG. 5, and/or support another process of the technology described in this specification.

For another example, in an implementation, the transceiver unit 1310 may be configured to perform S601, S606, and S608 in the embodiment shown in FIG. 6, and/or support another process of the technology described in this specification.

Alternatively, it should be understood that the transceiver unit 1310 may be configured to perform a sending operation and a receiving operation on a side of the fourth apparatus in the foregoing method embodiments, and the processing unit 1320 is configured to perform an operation other than the receiving operation and the sending operation of the fourth apparatusdevice in the foregoing method embodiments.

For example, in an implementation, the transceiver unit 1310 may be configured to perform S601, S603, S605, S606, S607 and S608 in the embodiment shown in FIG. 6; and/or configured to support another process of the technology described in this specification.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

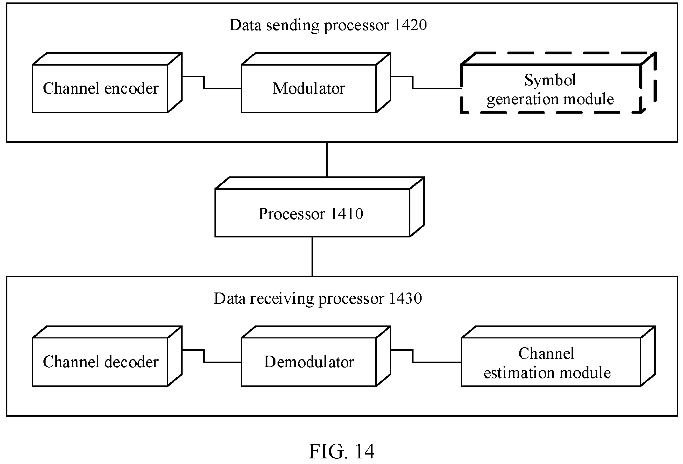

In this embodiment, refer to an apparatus shown in FIG. 14. In an example, the apparatus may implement functions similar to those of the processing unit 1320 in FIG. 13. In FIG. 14, the apparatus includes a processor 1410, a data sending processor 1420, and a data receiving processor 1430. The processing unit 730, the processing unit 930, or the processing unit 1130 in the foregoing embodiments may be the processor 1410 in FIG. 14, and completes corresponding functions. The processing unit 730, the processing unit 930, or the processing unit 1130 in the foregoing embodiments may be the data sending processor 1420 and/or the data receiving processor 1430 in FIG. 14. Although FIG. 14 shows a channel encoder and a channel decoder, it may be understood that the modules are merely examples, and do not constitute a limitation on this embodiment.

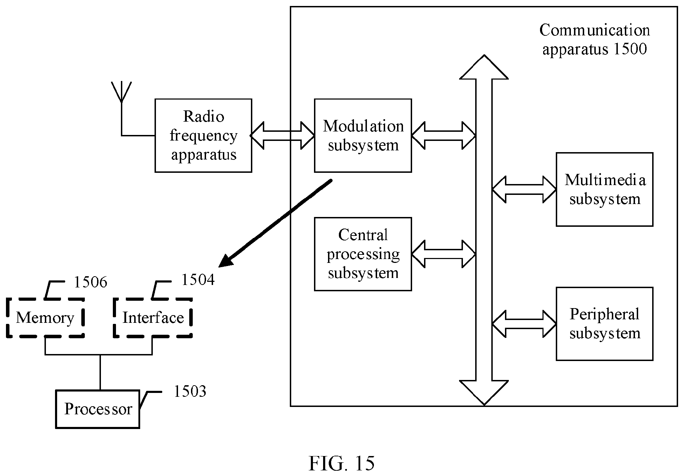

FIG. 15 shows another form of an embodiment. The communication apparatus 1500 includes modules such as a modulation subsystem, a central processing subsystem, and a peripheral subsystem. The communication apparatus in this embodiment may serve as the modulation subsystem in the communication apparatus. Specifically, the modulation subsystem may include a processor 1503 and an interface 1504. The processor 1503 completes functions of the processing unit 730, the processing unit 930, or the processing unit 1130. The interface 1504 completes functions of the receiving unit 710 and the sending unit 720, or the sending unit 910 and the receiving unit 920, or the sending unit 1110 and the receiving unit 1120. In another variant, the modulation subsystem includes a memory 1506, a processor 1503, and a program that is stored in the memory 1506 and that can be run on the processor. When executing the program, the processor 1503 implements the method of the first apparatus, the second apparatus, or the fourth apparatus in the foregoing method embodiments. It should be noted that the memory 1506 may be nonvolatile or volatile. The memory 1506 may be located in the modulation subsystem, or may be located in the processing apparatus 1500, provided that the memory 1506 can be connected to the processor 1503.

An embodiment of this application further provides a communication system. Specifically, the communication system includes a first apparatus and a second apparatus, or may include more first apparatuses and more second apparatuses. Alternatively, the communication system includes a first apparatus and a fourth apparatus, or may include more first apparatuses and more fourth apparatuses. Alternatively, the communication system includes a first apparatus, a second apparatus, and a fourth apparatus; or may include more first apparatuses, more second apparatuses, and more fourth apparatuses.

The first apparatus and the second apparatus are configured to implement functions of the devices related to FIG. 2, FIG. 3, FIG. 4, FIG. 5, and FIG. 6. For details, refer to related description in the method embodiments. Details are not described herein again. The fourth apparatus is configured to implement functions of the foregoing device related to FIG. 6. For details, refer to related description in the method embodiments. Details are not described herein again.

An embodiment of this application further provides a computer-readable storage medium, including instructions. When the instructions are run on a computer, the computer is enabled to perform the methods performed by the first apparatus and the second apparatus in FIG. 2, FIG. 3, FIG. 4, FIG. 5, and FIG. 6. Alternatively, when the instructions are run on a computer, the computer is enabled to perform the method performed by the fourth apparatus in FIG. 6.

An embodiment of this application further provides a computer program product, including instructions. When the computer program product runs on a computer, the computer is enabled to perform the methods performed by the first apparatus and the second apparatus in FIG. 2, FIG. 3, FIG. 4, FIG. 5, and FIG. 6. Alternatively, when the computer program product runs on a computer, the computer is enabled to perform the method performed by the fourth apparatus in FIG. 6.

An embodiment of this application provides a chip system. The chip system includes a processor, and may further include a memory. The chip system is configured to implement functions of the first apparatus and the second apparatus in the foregoing methods, or is configured to implement functions of the first apparatus, the second apparatus, and the fourth apparatus in the foregoing methods. The chip system may include a chip, or may include a chip and another discrete device.

It should be further understood that the terms "system" and "network" may be used interchangeably in embodiments of this application. "At least one" means one or more, and "a plurality of" means two or more. The term "and/or" describes an association relationship between associated objects and indicates that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first message and a second message are merely intended to distinguish between different messages, but do not indicate that the two messages are different in a priority, a sending sequence, or importance.

It should be understood that the processor mentioned in embodiments of this application may be a CPU, or may be another general-purpose processor, a digital signal processor (digital signal processor DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. Through example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that, in embodiments of this application, sequence numbers of the foregoing processes do not mean execution sequences. The execution sequences of the processes should be determined based on functions and internal logic of the processes, and should not constitute any limitation to implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division, and may be another manner of division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, to be specific, may be located in one position, or may be distributed on a plurality of network units. Some or all of the units may be selected based on an actual requirement, to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps in the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method performed by a first apparatus, comprising:
receiving (S201), a first message from a second apparatus, wherein the first message is used for requesting M pieces of verification information from the first apparatus, the verification information is used for verifying information, the M pieces of verification information are M anonymous certificates, and M is a positive integer;
sending (S202), a second message to the second apparatus, wherein the second message comprises N pieces of verification information included in the M pieces of verification information, and N is an integer and equal to or less than M;
wherein N is determined based on a quantity of multiple request messages from multiple apparatuses, each of the request messages is used for requesting verification information from the first apparatus, the multiple apparatuses include the second apparatus, and the multiple request messages include the first message.

2. A communication apparatus, wherein the communication apparatus comprises a processor, the processor is connected to a memory, the memory is configured to store a computer program, and the processor is configured to execute the computer program stored in the memory, the apparatus is enabled to perform the method according to claim 1.

3. A computer-readable storage medium, wherein the computer-readable storage medium is configured to store a program instruction, and when the program instruction is run, the method according to claim 1 is implemented.

## Patentansprüche

1. Kommunikationsverfahren, das durch eine erste Vorrichtung durchgeführt wird, umfassend:
Empfangen (S201) einer ersten Nachricht von einer zweiten Vorrichtung, wobei die erste Nachricht verwendet wird zum Anfordern von M Bestandteilen von Verifikationsinformationen von der ersten Vorrichtung, wobei die Verifikationsinformationen zum Verifizieren von Informationen verwendet werden, wobei die M Bestandteile von Verifikationsinformationen M anonyme Zertifikate sind und wobei M eine positive ganze Zahl ist;
Senden (S202) einer zweiten Nachricht an die zweite Vorrichtung, wobei die zweite Nachricht N Bestandteile von Verifikationsinformationen umfasst, die in den M Bestandteilen von Verifikationsinformationen enthalten sind, und wobei N eine ganze Zahl und gleich oder kleiner als M ist;
wobei N basierend auf einer Anzahl von mehreren Anforderungsnachrichten von mehreren Vorrichtungen ermittelt wird, wobei jede der Anforderungsnachrichten verwendet wird zum Anfordern von Verifikationsinformationen von der ersten Vorrichtung, wobei die mehreren Vorrichtungen die zweite Vorrichtung beinhalten und wobei die mehreren Anforderungsnachrichten die erste Nachricht beinhalten.

2. Kommunikationsvorrichtung, wobei die Kommunikationsvorrichtung einen Prozessor umfasst, wobei der Prozessor mit einem Speicher verbunden ist, wobei der Speicher konfiguriert ist zum Speichern eines Computerprogramms und wobei der Prozessor konfiguriert ist zum Ausführen des Computerprogramms, das in dem Speicher gespeichert ist, wobei die Vorrichtung aktiviert wird, um das Verfahren nach Anspruch 1 durchzuführen.

3. Computerlesbares Speichermedium, wobei das computerlesbare Speichermedium konfiguriert ist zum Speichern von Programmanweisungen und wobei, wenn die Programmanweisungen ausgeführt werden, das Verfahren nach Anspruch 1 implementiert wird.

## Revendications

1. Procédé de communication réalisé par un premier appareil, comprenant :
la réception (S201) d'un premier message en provenance d'un second appareil, le premier message étant utilisé pour demander M éléments d'informations de vérification en provenance du premier appareil, les informations de vérification étant utilisées pour vérifier des informations, les M éléments d'informations de vérification étant M certificats anonymes, et M étant un entier positif ;
l'envoi (S202) d'un second message au second appareil, le second message comprenant N éléments d'informations de vérification compris dans les M éléments d'informations de vérification, et N étant un nombre entier et égal ou inférieur à M ;
N étant déterminé sur la base d'une quantité de messages de demande multiples provenant de multiples appareils, chacun des messages de demande étant utilisé pour demander des informations de vérification au premier appareil, les multiples appareils comportant le second appareil, et les messages de demande multiples comportant le premier message.

2. Appareil de communication, l'appareil de communication comprenant un processeur, le processeur étant connecté à une mémoire, la mémoire étant configurée pour stocker un programme informatique, et le processeur étant configuré pour exécuter le programme informatique stocké dans la mémoire, l'appareil pouvant réaliser le procédé selon la revendication 1.

3. Support de stockage lisible par ordinateur, le support de stockage lisible par ordinateur étant configuré pour stocker des instructions de programme, et, lorsque les instructions de programme sont exécutées, le procédé selon la revendication 1 étant mis en œuvre.
